# EUROPÄISCHE PATENTSCHRIFT

(11) **EP 1 965 119 B1**
(45) Veröffentlichungstag und Bekanntmachung des Hinweises auf die Patenterteilung: **28.04.2010**
(21) Anmeldenummer: 07024703.6
(22) Anmeldetag: 20.12.2007
(51) Int. Cl.: F16L 41/02, F16L 41/03

(54) **Verteilerrohr und Warmwasserverteiler für eine Fussbodenheizung sowie Verfahren zur Herstellung des Verteilerrohrs**
Distribution pipe and hot water distributor for underfloor heating as well as method for manufacturing distribution pipe
Tuyau distributeur et distributeur d'eau chaude pour un chauffage au sol ainsi que procédé de fabrication du tuyau distributeur

(30) Priorität: 28.02.2007 DE 102007010116
(43) Veröffentlichungstag der Anmeldung: 03.09.2008
(73) Patentinhaber: AFRISO Euro-Index GmbH für Sicherungsarmaturen und Füllstandsmessung, 74363 Güglingen (DE)
(72) Erfinder: Heinz, Thomas, 74374 Zaberfeld (DE)
(74) Vertreter: Kohler Schmid Möbus

(56) Entgegenhaltungen:
- WO-A-01/71236
- WO-A-2006/097892
- DE-U1- 29 607 145
- JP-A- 9 287 676
- JP-A- 2001 132 886

## Beschreibung

Die vorliegende Erfindung betrifft ein Verteilerrohr und einen Warmwasserverteiler für eine Fußbodenheizung sowie ein Verfahren zur Herstellung des Verteilerrohrs.

Für Fußbodenheizungen sind Warmwasserverteiler mit Verteilerrohren bekannt, siehe zum Beispiel die DE 29 607 145 U, am einen Rohrende an einen Heizungskreislauf angeschlossen werden und das warme Wasser mithilfe von Absperrventilen an die angeschlossenen Heizungsrohre verteilen.

Es ist die Aufgabe der vorliegenden Erfindung, ein Verteilerrohr bereitzustellen, das ein modulares Verteilerkonzept mit einem bis nahezu unendlich vielen Rohrabschnitten (bestehend jeweils aus einem Rohrsegment mit einer Abgangsöffnung und einer Öffnung für ein Absperrventil) ermöglicht, und ein besonders vorteilhaftes Verfahren zur Herstellung des Verteilerrohres anzugeben sowie einen Warmwasserverteiler mit mindestens einem solchen Verteilerrohr bereitzustellen.

Diese Aufgabe wird erfindungsgemäß gelöst durch ein einstückiges Verteilerrohr, insbesondere aus Metall, für einen Warmwasserverteiler einer Fußbodenheizung mit mehreren Rohrabschnitten, die auf der gleichen Rohrseite jeweils eine erste, offene oder zu öffnende Öffnung zum Anschließen eines Heizungsrohrs und auf der gegenüberliegenden Rohrseite jeweils eine zweite, offene oder zu öffnende Öffnung zum Einsetzen eines Absperrventils aufweisen, wobei die einzelnen Rohrabschnitte an ihren einen Enden den gleichen kleineren Außendurchmesser und an ihren anderen Enden den gleichen größeren Außendurchmesser aufweisen.

Erfindungsgemäß ist zwischen benachbarten Rohrabschnitten jeweils ein Absatz im Rohrdurchmesser vorgesehen. Dadurch ist es möglich, Verteilerrohre mit einer bestimmten Anzahl an Rohrabschnitten (z.B. 15 Rohrabschnitte) herzustellen, durch Zersägen des Verteilerrohrs entlang eines Absatzes Verteilerrohre mit weniger Rohrabschnitten zu erzeugen und zwei oder mehrere Verteilerrohre miteinander zu koppeln. Verteilerrohre mit beliebiger Anzahl an Rohrabschnitten können so durch Zersägen oder Zusammenfügen hergestellt werden. Dies ermöglicht ein modulares Verteilerkonzept, mit dem Verteilerrohre mit einem bis nahezu unendlich vielen Rohrabschnitten hergestellt werden können, wobei vorteilhaft die einzelnen Rohrabschnitte identisch ausgebildet sind und die Öffnungen der einzelnen Rohrabschnitte im gleichen axialen Abstand, also äquidistant, angeordnet sind.

Erfindungsgemäß wird zum Herstellen eines wie oben ausgebildeten Verteilerrohrs ein heißes Metallrohr in ein heißes Werkzeug mit einer der Außenkontur des Verteilerrohrs entsprechenden Innenkontur eingelegt und mittels eines Druckfluids, wie z.B. Druckluft oder Druckflüssigkeit, an die Innenkontur des heißen Werkzeugs gepresst, und dann werden in das so geformte Rohrprofil auf der einen Rohrseite die ersten Öffnungen zum Anschließen von Heizungsrohren und auf der anderen Rohrseite die zweiten Öffnungen zum Einsetzen der Absperrventile eingebracht.

Die Erfindung betrifft auch einen Warmwasserverteiler einer Fußbodenheizung mit mindestens einem wie oben ausgebildeten Verteilerrohr und mit Absperrventilen, die in den zweiten Öffnungen des Verteilerrohrs befestigt sind und die ersten Öffnungen des Verteilerrohrs freigeben oder absperren.

Besonders vorteilhaft sind zwei oder mehrere solche Verteilerrohre miteinander zu einem längeren Verteilerrohr verbunden und dabei gegeneinander abgedichtet.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erfindungsgemäßes Verteilerrohr mit drei, jeweils zwei einander gegenüberliegende Öffnungen aufweisenden Rohrabschnitten in einer teilweise geschnitten dargestellten Seitenansicht;
- Fign. 2a, 2b: ein Rohrprofil, aus dem das in Fig. 1 gezeigte Verteilerrohr hergestellt wird, mit noch geschlossenen Öffnungen in einer abgebrochenen perspektivischen Ansicht (Fig. 2a) und in einer Querschnittansicht (Fig. 2b) entsprechend IIb-IIb in Fig. 2a;
- Fign. 3a, 3b: einen erfindungsgemäßen Warmwasserverteiler mit dem in Fig. 1 gezeigten Verteilerrohr in einer teilweise geschnitten dargestellten Seitenansicht (Fig. 3a) und in einer perspektivischen Ansicht (Fig. 3b);
- Fig. 4: eines der in Fig. 3 gezeigten Absperrventile in einer Detailansicht;
- Fig. 5: einen erfindungsgemäßen Warmwasserverteiler, der aus zwei identischen Verteilerrohren mit je fünf Rohrabschnitten zusammengesetzt ist; und
- Fig. 6: eine vergrößerte Detailansicht des Übergangsbereichs zwischen den beiden Verteilerrohren von Fig. 5.

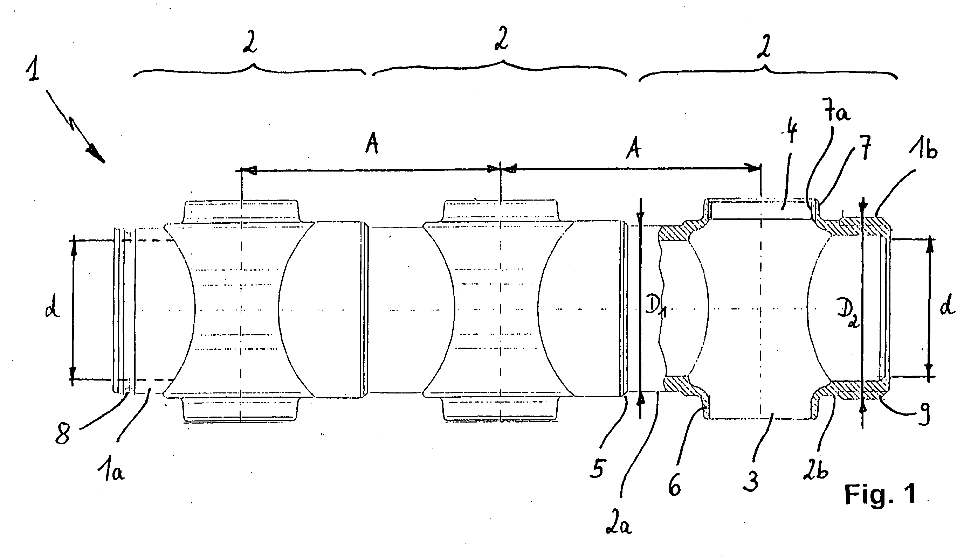

Das in **Fig. 1** gezeigte einstückige Verteilerrohr **1** dient zum Verteilen von Warmwasser in einem Warmwasserverteiler einer Fußbodenheizung. Das Verteilerrohr 1 ist aus Metall, z.B. aus Messing oder Edelstahl, und umfasst im Ausführungsbeispiel drei Rohrabschnitte (Verteilersegment) **2,** die auf der gleichen Rohrseite jeweils eine erste, in Fig. 1 untere Öffnung **3** zum Anschließen eines Heizungsrohrs und auf der gegenüberliegenden Rohrseite jeweils eine zweite, in Fig. 1 obere Öffnung **4** zum Einsetzen eines Absperrventils aufweisen. Die Öffnungen 3, 4 der einzelnen Rohrabschnitte 2 sind im gleichen axialen Abstand **A** zueinander angeordnet. Die einzelnen Rohrabschnitte 2 sind identisch ausgebildet und weisen an ihren in Fig. 1 linken Enden **2a** den gleichen kleineren Außendurchmesser **D₁** und an ihren rechten Enden **2b** den gleichen größeren Außendurchmesser **D₂** auf. Das Verteilerrohr 1 weist an seinen beiden Rohrenden **1a, 1b** jeweils den gleichen Innendurchmesser **d** auf. Mit anderen Worten weisen benachbarte Rohrabschnitte 2 jeweils einen Absatz **5** im Rohrdurchmesser auf. Im Bereich ihrer Öffnungen 3, 4 sind die Rohrabschnitte 2 jeweils als runde Ausprägung oder Ringansatz **6, 7** ausgebildet, wobei die oberen Ringansätze 7 als Gewindestutzen mit Innengewinde **7a** ausgebildet sind. Das Verteilerrohr 1 weist am einen, in Fig. 1 linken Rohrende 1a eine Ringnut **8** und am rechten Rohrende 1b ein Außengewinde **9** auf.

### Das Verteilerrohr 1 wird wie folgt hergestellt:

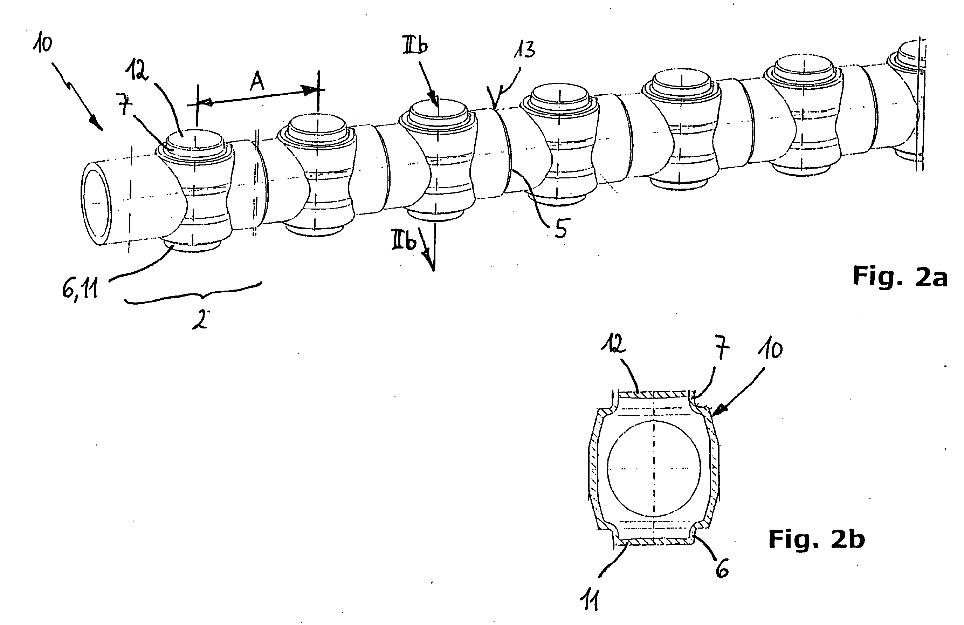

Ein Standard-Metallrohr, z.B. aus Messing oder Edelstahl, wird erhitzt und in ein heißes Werkzeug mit einer der Außenkontur des Verteilerrohrs 1 entsprechenden Innenkontur eingelegt. Mittels Druckluft wird das erhitzte Metallrohr an die Innenkontur des heißen Werkzeugs und dadurch in das in **Fign. 2a, 2b** dargestellte Rohrprofil **10** gepresst, das mehrere identische Rohrabschnitte 2 mit geschlossenen oberen und unteren Domen **11, 12** aufweist. Die Dome 11, 12 der einzelnen Rohrabschnitte 2 sind im gleichen axialen Abstand A zueinander angeordnet. Die Anzahl der Rohrabschnitte 2 ist beliebig und beträgt z.B. 15. Werden Verteilerrohre mit weniger Rohrabschnitten 2 benötigt, kann das Rohrprofil 10 entlang eines Absatzes 5 durch einen Trennschnitt **13** in entsprechend kürzere Rohrprofile (Segmentmodule) zersägt werden. Durch Aufbohren der Dome 11, 12 entstehen die Öffnungen 3, 4 und die Ringansätze 6, 7, wobei in die oberen Ringansätze 7 die Innengewinde 7a geschnitten werden. Abschließend werden an den beiden Profilenden die Ringnut 8 und das Außengewinde 9 geschnitten.

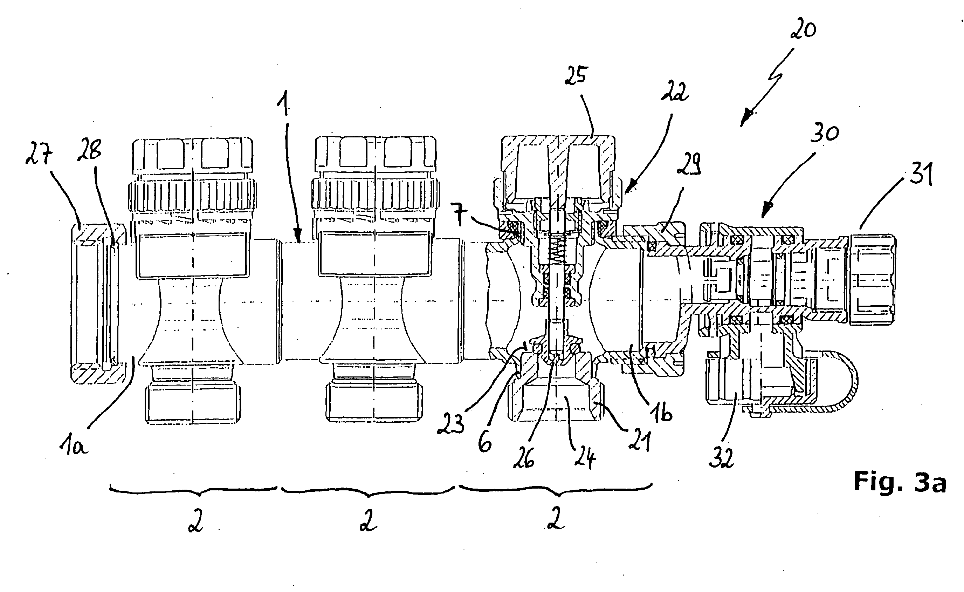

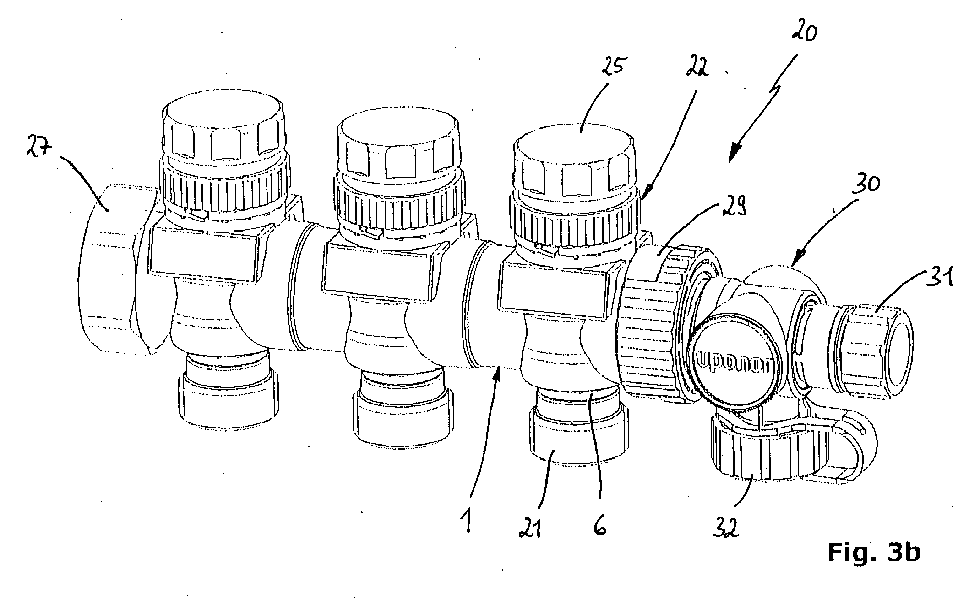

**Fign. 3a****,** **3b** zeigen einen kompletten Warmwasserverteiler **20** mit dem in Fig. 1 gezeigten Verteilerrohr 1. In die unteren Öffnungen 3 des Verteilerrohrs 1 sind Lötstutzen **21** zur Aufnahme von Heizungsrohren eingelötet. In die oberen Öffnungen 4 des Verteilerrohrs 1 sind Absperrventile **22** aus Kunststoff hineingeschraubt, die mit Ventilsitzen **23,** welche an den inneren Stirnseiten der Lötstutzen 21 vorgesehen sind, zusammenwirken, um die Öffnungen **24** der Lötstutzen 21 mit dem Verteilerrohr 1 zu verbinden oder absperren. Jedes Absperrventil 22 weist einen Drehgriff **25** zum Verschieben eines beweglichen Ventilglieds **26** zwischen einer geschlossenen Ventilstellung, in der das Ventilglied 26 am Ventilsitz 23 anliegt, und einer offenen Ventilstellung, in der das Ventilglied 26 den Ventilsitz 23 freigibt. Am linken Rohrende 1a des Verteilerrohrs 1 ist eine Überwurfmutter **27** mittels eines Sprengrings **28** drehbar gehalten, der in die Ringnut 8 eingelegt ist. Auf das am rechten Rohrende 1b vorgesehene Außengewinde 7 ist mittels einer Überwurfmutter **29** ein Endmodul **30** mit einem Absperrventil **31,** welches sowohl als Befüllhahn (KFE-Hahn) und als Entlüftungsventil verwendet werden kann, aufgeschraubt. Das Absperrventil 31 ist mit einer Verschlusskappe **32** verschlossen. Durch die exzentrische Anbringung des Endmoduls 30 kann dieses durch Drehung so positioniert werden, dass eine optimale Entlüftungsposition erreicht wird und nur eine geringe Menge an Restluft im Verteilerrohr 1 verbleibt. Der Warmwasserverteiler 20 wird an seinem linken Ende mittels der Überwurfmutter 27 an einen Heizungskreislauf angeschlossen und verteilt mittels der Absperrventile 22 das warme Wasser an die angeschlossenen Heizungsrohre.

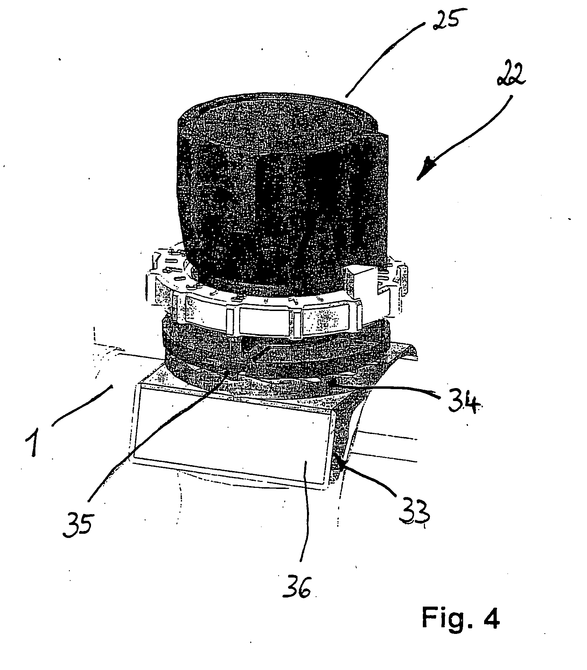

**Fig. 4** zeigt eines der in Fig. 3 gezeigten Absperrventile 22 in einer Detailansicht. Um den festen Sitz des Absperrventils 22 aus Kunststoff in dem Innengewinde 7a dauerhaft sicherzustellen, ist außen auf das Verteilerrohr 1 ein Sicherungsteil **33** drehfest aufgesetzt, das nach oben eine Sägezahnverrippung **34** aufweist. Das Absperrventil 22 weist nach unten eine oder mehrere Rasten **35** auf, die, wenn das Absperrventil 22 in das Innengewinde 7a eingeschraubt wird, in die Sägezahnverrippung 34 eingreifen. Die Sägezahnverrippung 34 lässt das Einschrauben des Absperrventils 22 zu, blockiert aber eine Drehbewegung des Absperrventils 22 in die entgegengesetzte Richtung. Ein einmal eingeschraubtes Absperrventil 22 kann ohne Werkzeug nicht mehr vom Verteilerrohr 1 gelöst werden. Das Sicherungsteil 31 sichert das eingeschraubte Absperrventil 22 gegen Lösen und weist ein Beschriftungsfeld **36** für den Rohrabschnitt 2 auf.

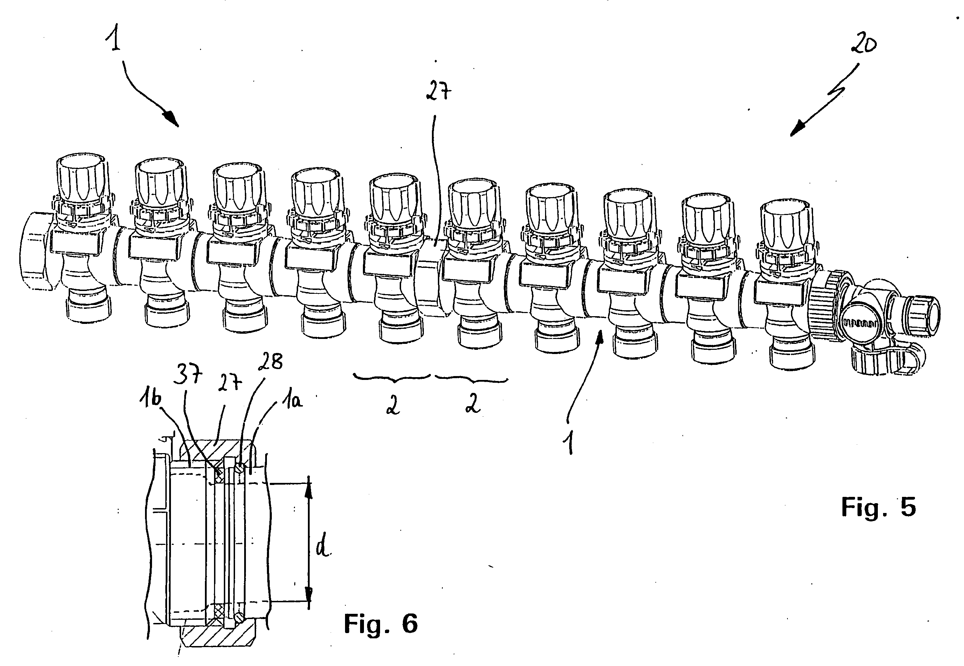

Bei dem in **Fig. 5** gezeigten Warmwasserverteiler 20 sind zwei aus dem gleichen Rohrprofil 1 hergestellte Verteilerrohre 1 mit je fünf Rohrabschnitten 2 zu einem längeren Verteilerrohr zusammengesetzt und mittels einer Flachdichtung **37** (Fig. 6) gegeneinander abgedichtet. Die Überwurfmutter 27 des rechten Verteilerrohrs 1 ist auf das Außengewinde des linken Verteilerrohrs 1 aufgeschraubt. Somit ist es möglich, zwei oder mehrere Verteilerrohre 1 miteinander zu koppeln. Die Längen der rechten und linken Enden der Verteilerrohr 1 sind jeweils derart gewählt, dass der axiale Abstand A auch zwischen den beiden Verteilerrohren 1 erhalten bleibt. Wie **Fig. 6** zeigt, haben die miteinander gekoppelten Rohrenden 1a, 1b der beiden Verteilerrohre 1, weil durch einen gemeinsamen Trennschnitt entstanden, den gleichen Innendurchmesser d und können daher mittels der Flachdichtung 37 gegeneinander abgedichtet werden. Die Überwurfmutter 27 ermöglicht die beliebige Drehausrichtung der beiden Verteilerrohre 1 gegeneinander.

## Patentansprüche

1. Einstückiges Verteilerrohr (1), insbesondere aus Metall, für einen Warmwasserverteiler (20) einer Fußbodenheizung, mit mehreren Rohrabschnitten (2), die auf der gleichen Rohrseite jeweils eine erste, offene oder zu öffnende Öffnung (3) zum Anschließen eines Heizungsrohrs und auf der gegenüberliegenden Rohrseite jeweils eine zweite, offene oder zu öffnende Öffnung (4) zum Einsetzen eines Absperrventils (22) aufweisen, **dadurch gekennzeichnet, dass** die einzelnen Rohrabschnitte (2) an ihren einen Enden (2a) den gleichen kleinere Außendurchmesser (D₁) und an ihren anderen Enden (2b) den gleichen größeren Außendurchmesser (D₂) aufweisen.

2. Verteilerrohr nach Anspruch 1, **dadurch gekennzeichnet, dass** die einzelnen Rohrabschnitte (2) identisch ausgebildet sind.

3. Verteilerrohr nach Anspruch 1 oder 2, **dadurch gekennzeichnet, dass** die Öffnungen (3, 4) der einzelnen Rohrabschnitte (2) im gleichen axialen Abstand (A) zueinander angeordnet sind.

4. Verteilerrohr nach einem der vorhergehenden Ansprüche, **dadurch gekennzeichnet, dass** die zweiten Öffnungen (4) der Rohrabschnitte (2) jeweils durch einen Gewindestutzen gebildet sind.

5. Verteilerrohrprofil nach einem der vorhergehenden Ansprüche, **dadurch gekennzeichnet, dass** an dem einen Rohrende (1a) des Verteilerrohrs (1) eine Ringnut (8) vorgesehen ist.

6. Verteilerrohr nach einem der vorhergehenden Ansprüche, **dadurch gekennzeichnet, dass** an dem anderen Rohrende (1 b) des Verteilerrohrs (1) ein Außengewinde (9) vorgesehen ist.

7. Verteilerrohr nach einem der vorhergehenden Ansprüche, **dadurch gekennzeichnet, dass** die einzelnen Rohrabschnitte (2) im Bereich ihrer Öffnungen (3, 4) jeweils als runde Ausprägung oder Ringansatz (6, 7) ausgebildet sind.

8. Verteilerrohr nach einem der vorhergehenden Ansprüche, **dadurch gekennzeichnet, dass** die beiden Rohrenden (1 a, 1 b) des Verteilerrohrs (1) den gleichen oder nahezu gleichen Innendurchmesser (d) aufweisen.

9. Verfahren zum Herstellen eines Verteilerrohrs (1) nach einem der vorhergehenden Ansprüche, **dadurch gekennzeichnet, dass** ein heißes Metallrohr in ein heißes Werkzeug mit einer der Außenkontur des Verteilerrohrs (1) entsprechenden Innenkontur eingelegt und mittels eines Druckfluids an die Innenkontur des heißen Werkzeugs gepresst wird und dass in das so geformte Rohrprofil auf der einen Rohrseite die ersten Öffnungen (3) zum Anschließen von Heizungsrohren und auf der anderen Rohrseite die zweiten Öffnungen (4) zum Einsetzen der Absperrventile (22) eingebracht werden.

10. Warmwasserverteiler (20) einer Fußbodenheizung mit mindestens einem Verteilerrohr (1) nach einem der Ansprüche 1 bis 8 und mit Absperrventilen (22), die in den zweiten Öffnungen (4) des Verteilerrohrs (1) angeordnet sind und die ersten Öffnungen (3) des Verteilerrohrs (1) freigeben oder absperren.

11. Warmwasserverteiler nach Anspruch 10, **dadurch gekennzeichnet, dass** am einen Rohrende (1 a) des Verteilerrohrs (1) eine Überwurfmutter (27) drehbar befestigt ist.

12. Warmwasserverteiler nach Anspruch 10 oder 11, **dadurch gekennzeichnet, dass** das andere Rohrende (1b) des Verteilerrohrs (1) durch ein Belüftungs- und/oder Befüllventil (31) verschlossen ist.

13. Warmwasserverteiler nach einem der Ansprüche 10 bis 12, **dadurch gekennzeichnet, dass** in den ersten Öffnungen (3) des Verteilerrohrs (1) Anschlussstutzen (21) befestigt, insbesondere eingelötet sind.

14. Warmwasserverteiler nach Anspruch 13, **dadurch gekennzeichnet, dass** an den Anschlussstutzen (21) jeweils die Ventilsitze (23) für die Absperrventile (22) vorgesehen sind.

15. Warmwasserverteiler nach einem der Ansprüche 10 bis 14, **dadurch gekennzeichnet, dass** zwei oder mehrere Verteilerrohre (1) miteinander zu einem längeren Verteilerrohrprofil verbunden sind.

16. Warmwasserverteiler nach Anspruch 15, **dadurch gekennzeichnet, dass** die miteinander gekoppelten Rohrenden (1a, 1 b) zweier Verteilerrohre (1) den gleichen oder nahezu gleichen Innendurchmesser (d) aufweisen.

17. Warmwasserverteiler nach einem der Ansprüche 10 bis 16, **dadurch gekennzeichnet, dass** zwischen Verteilerrohr (1) und eingeschraubtem Absperrventil (22) ein Sicherungsteil (33) angeordnet ist, das auf das Verteilerrohr (1) drehfest aufgesetzt ist und das eingeschraubte Absperrventil (22) gegen Abschrauben sichert.

18. Warmwasserverteiler nach Anspruch 17, **dadurch gekennzeichnet, dass** das Sicherungsteil (33) eine Sägezahnverrippung (34) und das Absperrventil (22) eine oder mehrere Rasten (35) aufweisen oder umgekehrt, wobei die eine oder mehreren Rasten (35) in die Sägezahnverrippung (34) eingreifen.

## Claims

1. One-piece distribution pipe (1), in particular made from metal, for a hot water distributor (20) of an underfloor heating, comprising several pipe sections (2) each having, on the same side of the pipe, a first opening (3) that is open or is to be opened for connecting a heating pipe and each having, on the opposite side of the pipe, a second opening (4) that is open or is to be opened for inserting a shut-off valve (22), **characterized in that** the one ends (2a) of the individual pipe sections (2) have the same, smaller outer diameter (D₁), and the other ends (2b) thereof have the same, larger outer diameter (D₂).

2. Distribution pipe according to claim 1, **characterized in that** the individual pipe sections (2) are identically designed.

3. Distribution pipe according to claim 1 or 2, **characterized in that** the openings (3, 4) of the individual pipe sections (2) are disposed at the same axial separation (A) from each other.

4. Distribution pipe according to any one of the preceding claims, **characterized in that** each of the second openings (4) of the pipe sections (2) is formed by a threaded socket.

5. Distribution pipe profile according to any one of the preceding claims,
**characterized in that** an annular groove (8) is provided at one pipe end (1 a) of the distribution pipe (1).

6. Distribution pipe according to any one of the preceding claims, **characterized in that** an external thread (9) is provided at the other pipe end (1 b) of the distribution pipe (1).

7. Distribution pipe according to any one of the preceding claims, **characterized in that** each individual pipe section (2) is designed to have a round shape or an annular projection (6, 7) in the area of its openings (3, 4).

8. Distribution pipe according to any one of the preceding claims, **characterized in that** the two pipe ends (1a, 1 b) of the distribution pipe (1) have the same or almost the same inner diameter (d).

9. Method for producing a distribution pipe (1) according to any one of the preceding claims, **characterized in that** a hot metal pipe is inserted into a hot tool having an inner contour that corresponds to the outer contour of the distribution pipe (1), and is pressed against the inner contour of the hot tool by means of a pressure fluid, and the first openings (3) are introduced on one pipe side into the thus formed pipe profile for connecting heating pipes, and the second openings (4) are introduced on the other pipe side for inserting the shut-off valves (22).

10. Hot water distributor (20) of an underfloor heating comprising at least one distribution pipe (1) according to any one of the claims 1 through 8, and shut-off valves (22) which are disposed in the second openings (4) of the distribution pipe (1) and open or close the first openings (3) of the distribution pipe (1).

11. Hot water distributor according to claim 10, **characterized in that** a union nut (27) is rotatably mounted to one pipe end (1 a) of the distribution pipe (1).

12. Hot water distributor according to claim 10 or 11, **characterized in that** the other pipe end (1 b) of the distribution pipe (1) is closed by a ventilation and/or a fill valve (31).

13. Hot water distributor according to any one of the claims 10 to 12,
**characterized in that** connecting pieces (21) are mounted, in particular soldered, to the first openings (3) of the distribution pipe (1).

14. Hot water distributor according to claim 13, **characterized in that** each connecting piece (21) comprises the valve seats (23) for the shut-off valves (22).

15. Hot water distributor according to any one of the claims 10 to 14,
**characterized in that** two or more distribution pipes (1) are connected to each other to form a longer distribution pipe profile.

16. Hot water distributor according to claim 15, **characterized in that** the coupled pipe ends (1a, 1 b) of two distribution pipes (1) have the same or almost the same inner diameter (d).

17. Hot water distributor according to any one of the claims 10 through 16,
**characterized in that** a securing element (33) is disposed between the distribution pipe (1) and the screwed-in shut-off valve (22), the securing element (33) being disposed onto the distribution pipe (1) in a torque-proof fashion and preventing the screwed-in shut-off valve (22) from being unscrewed.

18. Hot water distributor according to claim 17, **characterized in that** the securing element (33) has a sawtooth ribbing (34) and the shut-off valve (22) has one or more notches (35) or vice versa, wherein one or more notch/notches (35) engage(s) with the sawtooth ribbing (34).

## Revendications

1. Tubulure monobloc de distribution (1), notamment en métal, destinée à un distributeur (20) d'eau chaude d'un système de chauffage par le sol, comprenant plusieurs tronçons tubulaires (2) qui comportent, du même côté de la tubulure, un premier orifice respectif (3) ouvert ou conçu pour être ouvert, en vue du raccordement d'un tuyau de chauffage ; et, du côté opposé de ladite tubulure, un second orifice respectif (4) ouvert ou conçu pour être ouvert, en vue de l'intégration d'une soupape d'isolement (22), **caractérisée par le fait que** les tronçons tubulaires individuels (2) présentent le même diamètre extérieur (D1) de dimensionnement inférieur, aux unes (2a) de leurs extrémités et, à leurs autres extrémités (2b), le même diamètre extérieur (D2) de dimensionnement supérieur.

2. Tubulure de distribution selon la revendication 1, **caractérisée par le fait que** les tronçons tubulaires individuels (2) sont de réalisation identique.

3. Tubulure de distribution selon la revendication 1 ou 2, **caractérisée par le fait que** les orifices (3,4) des tronçons tubulaires individuels (2) sont disposés à la même distance axiale (A) les uns des autres.

4. Tubulure de distribution selon l'une des revendications précédentes, **caractérisée par le fait que** les seconds orifices (4) des tronçons tubulaires (2) sont respectivement formés d'un manchon taraudé.

5. Profil de tubulure de distribution selon l'une des revendications précédentes, **caractérisé par le fait qu'**une rainure annulaire (8) est prévue à l'une (1a) des extrémités de la tubulure de distribution (1).

6. Tubulure de distribution selon l'une des revendications précédentes, **caractérisée par le fait qu'**un filetage extérieur (9) est prévu à l'autre extrémité (1b) de ladite tubulure de distribution (1).

7. Tubulure de distribution selon l'une des revendications précédentes, **caractérisée par le fait que** les tronçons tubulaires individuels (2) sont respectivement réalisés, dans la région de leurs orifices (3, 4), sous la forme d'une empreinte sortante circulaire ou d'un embout annulaire (6, 7).

8. Tubulure de distribution selon l'une des revendications précédentes, **caractérisée par le fait que** les deux extrémités (1a, 1b) de ladite tubulure de distribution (1) présentent le même, ou quasiment le même diamètre intérieur (d).

9. Procédé de fabrication d'une tubulure de distribution (1) selon l'une des revendications précédentes, **caractérisé par le fait qu'**un tube métallique chaud est introduit dans un outil chaud muni d'un profilage intérieur correspondant au profilage extérieur de ladite tubulure de distribution (1), et est ensuite plaqué fortement, sous l'action d'un fluide pressurisé, contre ledit profilage intérieur dudit outil chaud ; et **par le fait que**, dans le profil tubulaire ainsi formé, les premiers orifices (3), destinés au raccordement de tuyaux de chauffage, sont pratiqués sur l'un des côtés de la tubulure, les seconds orifices (4), dédiés à l'intégration des soupapes d'isolement (22), étant façonnés sur l'autre côté de ladite tubulure.

10. Distributeur (20) d'eau chaude dans un système de chauffage par le sol, comprenant au moins une tubulure de distribution (1) selon l'une des revendications 1 à 8, ainsi que des soupapes d'isolement (22) qui sont logées dans les seconds orifices (4) de ladite tubulure de distribution (1), et dégagent ou occultent les premiers orifices (3) de ladite tubulure de distribution (1).

11. Distributeur d'eau chaude selon la revendication 10, **caractérisé par le fait qu'**un capuchon taraudé (27) est fixé, de manière rotative, à l'une (1a) des extrémités de la tubulure de distribution (1).

12. Distributeur d'eau chaude selon la revendication 10 ou 11, **caractérisé par le fait que** l'autre extrémité (1b) de la tubulure de distribution (1) est obturée par un robinet (31) de ventilation et/ou de remplissage.

13. Distributeur d'eau chaude selon l'une des revendications 10 à 12, **caractérisé par le fait que** des embouts de raccordement (21) sont fixés, notamment incorporés par brasage dans les premiers orifices (3) de la tubulure de distribution (1).

14. Distributeur d'eau chaude selon la revendication 13, **caractérisé par le fait que** les sièges d'obturation (23), affectés aux soupapes d'isolement (22), sont respectivement prévus sur les embouts de raccordement (21).

15. Distributeur d'eau chaude selon l'une des revendications 10 à 14, **caractérisé par le fait que** deux ou plusieurs tubulures de distribution (1) sont reliées mutuellement pour constituer un profil de tubulure de distribution de longueur supérieure.

16. Distributeur d'eau chaude selon la revendication 15, **caractérisé par le fait que** les extrémités (1a, 1b) de deux tubulures de distribution (1), mutuellement accouplées, présentent le même, ou quasiment le même diamètre intérieur (d).

17. Distributeur d'eau chaude selon l'une des revendications 10 à 16, **caractérisé par le fait qu'**une pièce d'arrêt (33), interposée entre la tubulure de distribution (1) et la soupape d'isolement (22) intégrée par vissage, est mise en place sur ladite tubulure de distribution (1) avec verrouillage rotatif et interdit un dévissage de ladite soupape d'isolement (22) intégrée par vissage.

18. Distributeur d'eau chaude selon la revendication 17, **caractérisé par le fait que** la pièce d'arrêt (33) possède un nervurage (34) à dents de scie et la soupape d'isolement (22) offre un ou plusieurs cran(s) (35), ou inversement, ledit ou lesdits cran(s) (35) s'engageant dans ledit nervurage (34) à dents de scie.
